# EUROPEAN PATENT APPLICATION

(11) **EP 4 524 446 A1**
(43) Date of publication of application: **19.03.2025**
(21) Application number: 24200321.8
(22) Date of filing: 13.09.2024
(51) Int. Cl.: F16L 59/04, F16L 59/16, F16L 59/18, F16L 55/07, F16B 35/04, F16L 59/08

(54) **INSULATION ELEMENT PROVIDED WITH AT LEAST ONE DRAINAGE ELEMENT**

(30) Priority: 14.09.2023 IT 202300018903
(71) Applicant: Teknovis3 S.r.l., 66100 Chieti (IT)
(72) Inventor: Sutti, Luca, 65012 Cepagatti (IT); Sutti, Ercole, 66100 Chieti (IT)
(74) Representative: Giraldi, Elisa

(57) **Abstract**

An insulation element (5) for a system element comprises a stratified main body (10) in turn comprising a first layer (T1) of technical fabric, a second layer (T2) of technical fabric, and at least one insulation layer (CB) comprised between said first layer (T1) of technical fabric and said second layer (T2) of technical fabric, wherein said insulation element (5) further comprises at least one draining element (20) which places an outer surface (PI) of the first fabric layer (T1), adapted to face the system element, into fluid communication with an area (PE) surrounding the outer surface of the second layer (T2) of technical fabric so that any leaks (P) involving the system element are promptly identified and visible outside the insulation element (5), wherein said draining element (20) comprises a head portion (22) and a tubular body (24), in which the head portion (22) is provided with a through hole (23) and the tubular body (24) is an internally hollow tube having a thread (25) on the outer wall and an outlet mouth (26) to allow any fluid generated by leaks (P) of the system element to enter the draining element (20) by means of the through hole (23), flow through the tubular body (24) and exit to the outside of the insulation element (5) through the outlet mouth (26) of the draining element (20) in an area (PE) surrounding the outer surface of the second layer (T2) of technical fabric.

## Description

### FIELD OF THE INVENTION

The present invention relates to the field of insulation elements.

In particular, the present invention relates to items made of fabric, metal or other material and provided with at least one insulation layer, to be used as sleeves to apply on the tubes or on the joints between different pipes, and on any system element, such as, for example, valves, filters, flanges, compensators, etc.... and on elements with complex geometrical shapes.

### BACKGROUND ART

It is known in the prior art to use items made of fabric, metal or other material to cover the pipes or joints between different tubes or other system elements such as valves, filters, flanges, compensators, or complex geometrical shapes in order to avoid energy dispersal.

However, such a solution obstructs the exit of the leaks to the outside of the item because it contains them therein. However, such a solution does not allow promptly identifying the leaks and adequately intervening with maintenance.

### SUMMARY OF THE INVENTION

It is the object of the invention to provide an insulation element which allows the presence of leaks to be seen and to intervene promptly to block them. This becomes essential for the proper operation of systems with any type of fluid.

Further, such a solution is preferable to avoid waste and maintenance and replenishment costs in any industrial field.

The object of the invention has been achieved by an insulation element as defined in claim 1.

In particular, an insulation element for a system element, such as a pipe or a joint, or for other system elements such as valves, filters, flanges, compensators, or for complex geometrical shapes, comprises a stratified main body provided with a first layer of technical fabric, metal or other material, a second layer of technical fabric, metal or other material and at least one intermediate insulation layer between the first layer of technical fabric and the second layer of technical fabric.

The insulation element further comprises at least one draining element which places an outer surface of the first fabric layer, adapted to face the system element, into fluid communication with an area surrounding the outer surface of the second layer of technical fabric so that any leaks involving the system element are promptly identified and visible outside the insulation element.

The draining element comprises a head portion and a tubular body, in which the head portion is provided with a through hole and the tubular body is an internally hollow tube providing a thread on the outer wall and an outlet mouth to allow any fluid generated by leaks of the system element to enter the draining element by means of the through hole, flow through the tubular body and exit to the outside of the insulation element through the outlet mouth of the draining element in an area surrounding the outer surface of the second layer of technical fabric.

In embodiments of the insulation element, the first layer of technical fabric, metal or other material and the second layer of technical fabric, metal or other material are selected from glass fabric, silicone glass fabric, fabric made of PTFE, PTFE, Goretex, Cordura, PVC, polyurethane and other technical fabrics, aluminum and other materials or alloys.

Further, the insulation layer in various embodiments is made of a material selected from rock wool, mineral felt, ceramic wool, nanotechnological material, rubber sponge and other insulation materials.

Finally, the draining element 20 is made of steel, nylon, PTFE or other suitable materials.

Depending on the applications, the fluid to be drained is steam, condensation, heated or superheated water, diathermic oil or other types of fluid which must be monitored to identify possible leaks.

In some embodiments, a through hole allowing the insertion of the draining element is provided on the main body of the insulation element.

In the embodiments herein described, the draining element is inserted in the insulation element with the head portion facing the inner portion and with the tubular body coming out of and protruding from the insulation element towards the outer portion.

In use, the draining element is fastened to the insulation element by means of a threaded nut.

In various embodiments, the head of the draining element is round or flat in shape.

Preferably, the through hole is a simple cylindrical hole or a funnel shape with a moderate flare or a funnel shape with a highly accentuated flare.

In alternative embodiments, the threaded portion of the tubular body has small dimensions and there are two other non-threaded portions having a smaller diameter. In this case, a non-threaded junction portion between the threaded tubular body and a non-threaded tip portion is frustoconical in shape, and the non-threaded tip portion has a smaller diameter than the tubular body to allow connecting an extension tube for draining fluids to the insulation element by means of the draining element.

In some embodiments, a sealing ring is arranged on the two peripheral edges of the through hole of the main body to ensure that, in the coupling, the head of the draining element and the nut have a greater seal than a coupling to the technical fabric, metal or other material alone.

In some situations, the insulation element is adapted to be applied on a valve or a filter and is provided with two draining elements positioned at the joining flanges.

On the other hand, if applied on a flange, the draining element is adapted to be positioned at the joint between the plates of the flange.

In some embodiments, the insulation element is provided with one or more closing elements, each provided with a ribbon or string element which is inserted and secured in a locking element or buckle.

### BRIEF DESCRIPTION OF THE FIGURES

Reference is made later in this description to the drawings in the accompanying figures, in which:
- Figures 1, 2 and 3 show an exemplar embodiment of an insulation element and the steps for making it,
- Figure 4 shows an exemplar application of the insulation element,
- Figure 5 shows some exemplar embodiments of the draining element,
- Figure 6 shows some exemplar embodiments of the draining element,
- Figures 7 and 8 show an exemplar embodiment of an insulation element, with particular detail of the area in which the draining element is inserted,
- Figure 9 shows an exemplar application of a removable insulation element to a valve,
- Figure 10 shows an exemplar application of a removable insulation element to a filter,
- Figure 11 shows an exemplar application of a removable insulation element to a flange, and

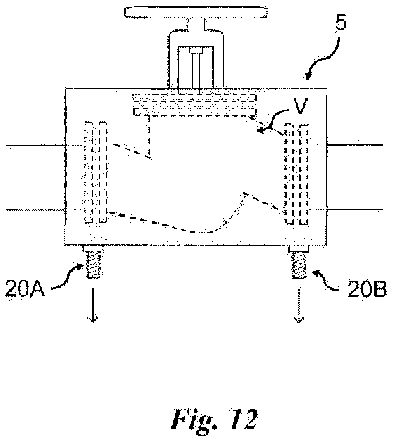

- Figure 12 shows an exemplar application of a rigid insulation element to a valve.

The components according to the present description have been depicted in the drawings, where suitable, with conventional symbols, showing only those specific details which are pertinent to the understanding of the embodiments of the present invention, so as not to highlight details which will be immediately apparent to those skilled in the art, with reference to the description provided below.

### DETAILED DESCRIPTION OF THE INVENTION

The solution of the present invention is now described with the aid of the drawings.

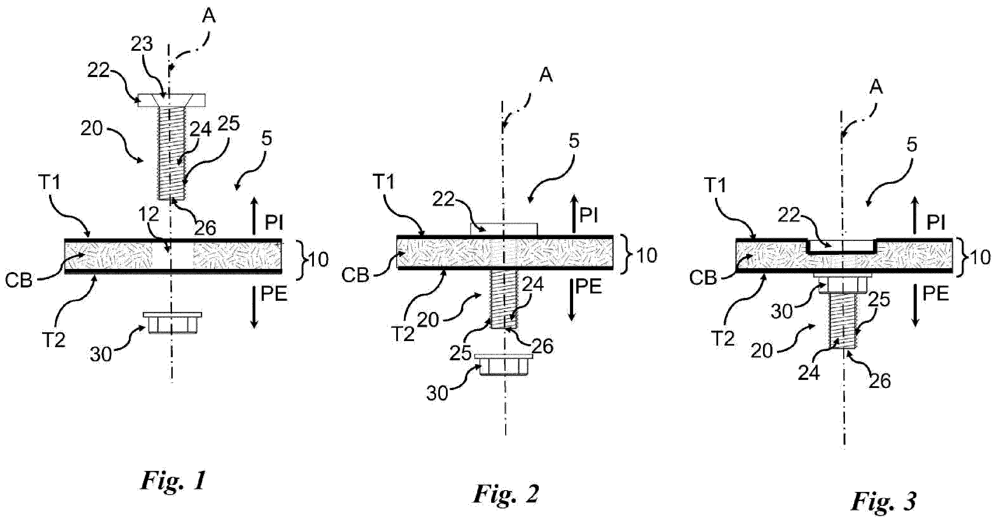

With reference to Figure 1, it shows an insulation element 5 for a pipe, a joint, or other system elements such as, for example, valves, filters, flanges, compensators, etc...., and for complex geometry shapes comprising a stratified main body 10 provided with a first layer T1 of technical fabric, metal, or other material, a second layer T2 of technical fabric, metal or other material, and at least one insulation layer CB.

It is worth noting that the word "metal" means metals and various metal-based alloys.

Obviously, the stratified main body 10 can comprise a different number of layers.

During use, the insulation element 5 is wrapped around a system element such as a pipe or a joint or other elements, thus defining an inner portion PI and an outer portion PE of the insulation element 5. In particular, the inner portion PI of the insulation element 5 is delimited by the outer surface of the first layer T1 of technical fabric and faces the system element, and the outer portion PE of the insulation element 5 is the area surrounding the outer surface of the second fabric layer T2, i.e., the portion of the insulation element 5 visible from the outside.

Therefore, in the description, inner portion PI means the area delimited by the outer surface of the first layer T1 of technical fabric adapted to face the system element. Such an area is the one possibly involved by the fluid leaks P of the system element.

As mentioned, the insulation element 5 comprises at least one draining element 20 which places the inner portion PI and the outer portion PE of the insulation element 5 in fluid communication so that any leaks P of the system element, such as, for example, a pipe, joint, valve, filter, flange, compensator, etc., are promptly identified.

The stratified main body 10 of the insulation element 5 is made of fabric, metal or other material in which there is at least a first layer T1 of technical fabric, metal or other material, a second layer T2 of technical fabric, metal or other material and an intermediate insulation layer CB.

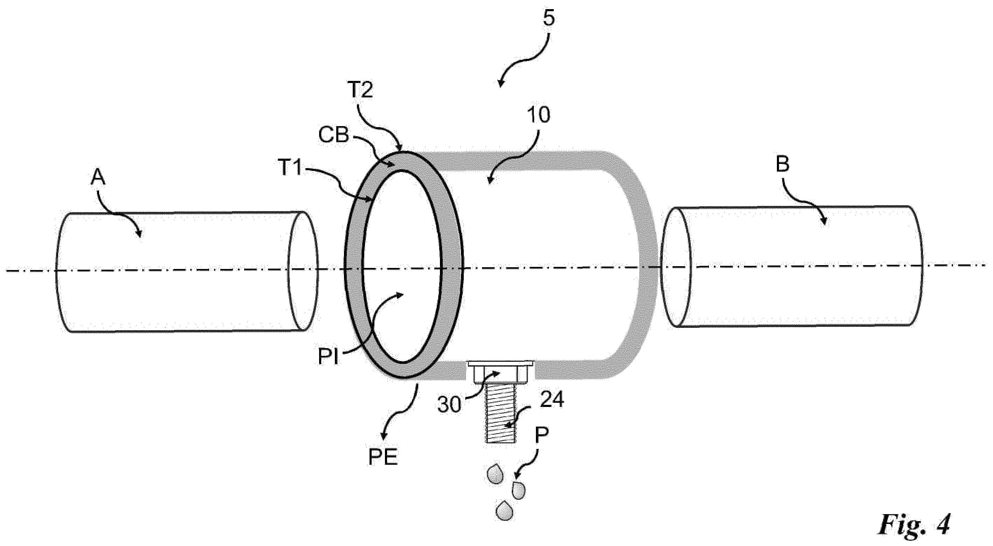

In particular, the insulation layer CB in the insulation element 5 is between the first layer T1 of technical fabric and the second layer T2 of technical fabric. The draining element 20 places an outer surface PI of the first fabric layer T1, adapted to face the system element, in fluid communication with an area surrounding the outer surface PE the second fabric layer T2 so that any leaks P (see Figure 4) involving the system element are promptly identified and visible outside the insulation element 5.

In particular, the draining element 20 comprises a head portion 22 and a tubular body 24, in which the head portion 22 is provided with a through hole 23 and the tubular body 24 is an internally hollow tube providing a thread 25 on the outer wall and an outlet mouth 26 to allow any fluid generated by leaks P of the system element to enter the draining element 20 by means of the through hole 23, flow through the tubular body 24 and exit to the outside of the insulation element 5 through the outlet mouth 26 of the draining element 20 in an area PE surrounding the outer surface of the second fabric layer T2.Below are some examples of fabrics and materials for the first layer T1 and the second layer T2: glass fabric, silicone glass fabric, fabric made of PTFE, PTFE, Goretex, Cordura, PVC, polyurethane and other technical fabrics, aluminum and other materials or alloys.

The main insulation materials are selected from a group comprising rock wool, mineral felt, ceramic wool, nanotechnological material, rubber sponge (Armaflex type) and other insulation materials.

In various embodiments, the draining element 20 comprises a head portion 22 and a tubular body 24. The head portion 22 is provided with a through hole 23 and the tubular body 24 is an internally hollow tube having a thread 25 on the outer wall and an outlet mouth 26. In particular, the draining element 20 can consist of a screw with a perforated head and tubular body to allow any fluid, generated by leaks P of the system element, present on the outer surface PI of the first fabric layer T1 of the insulation element 5, to enter the draining element 20 by means of the through hole 23, flow through the tubular body 24 and exit to the outside through the outlet mouth 26.

The shape of the draining element 20 creates a passage from the inner portion PI to the outer portion PE of the insulation element 5, and in particular, creates a flow channel for the fluid to drain, and in particular, for the fluid to cross the whole stratified main body 10, i.e., the first layer T1 of technical material, the intermediate insulation layer CB and the second layer T2 of technical material.

Therefore, the draining element 20 creates a passage crossing the whole stratified main body 10.

The draining element 20 can be made of steel, nylon, PTFE or other suitable materials. Obviously, the material selected is compatible with the type of fluid to be drained, i.e., steam, condensation, heated or superheated water, diathermic oil or other types of fluid which must be monitored to identify possible leaks P.

The draining element 20 can be made in a single piece or be assembled by joining the head portion 22 with the tubular body 24.

A through hole 12 allowing the insertion of the tubular body 24 of the draining element 20 is provided on the main body 10 of the insulation element 5.

With reference to Figures 2 and 3, steps are shown for making the insulation element 5 in which there is fitted, on the main body 10, the draining element 20 inserted with the head portion 22 facing the inner portion PI (i.e., at the first layer T1 of technical fabric, metal or other material) of the insulation element 5 and with the tubular body 24 coming out of and protruding from the insulation element 5 towards the outer portion PE.

In greater detail, the head portion 22 is arranged or fastened at the outer surface of the first layer T1 of technical fabric and the tubular body 24 crosses at least the insulation layer CB and the second layer T2 of technical fabric.

In a variant, the tubular body 24 crosses also the first layer T1 of technical fabric.

With reference to Figure 3, the draining element 20 is fastened to the insulation element 5 by means of a threaded nut 30. By screwing and sufficiently tightening nut 30 onto thread 25 of the draining element 20, head 22 compresses a portion of the first layer T1 of technical fabric, metal or other material and a part of the insulation layer CB.

In various embodiments, in the mounted condition, the upper edge of head 22 of the draining element 20 is flush with the first layer T1 of technical fabric, metal or other material. Alternatively, in other embodiments, in the mounted condition, the upper edge of head 22 of the draining element 20 protrudes towards the inner portion of the insulation element 5, i.e., it protrudes with respect to the first layer T1 of technical fabric, metal or other material.

Figure 4 shows an insulation element 5 used to cover the joining point of two facing tubes A and B.

The insulation element 5 is wrapped around the pipes A and B in the facing condition with the tubes juxtaposed and covers the free end portions of the two tubes A and B.

As shown in Figure 4, any leaks P are brought outside the insulation element 5 through the draining element 20.

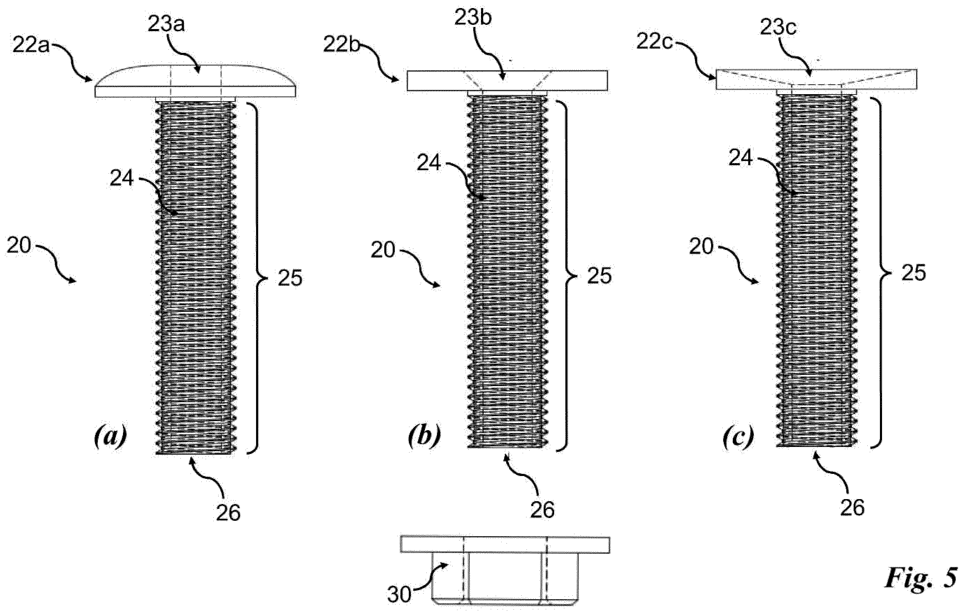

Figure 5 shows different embodiments of the draining element 20. They differ from one another essentially for the shape of head 22. In particular, head 22a is round in shape. In this case, the through hole 23a is a simple cylindrical hole. Differently, heads 22b and 22c are flat and have a different shape than the through hole 23. In particular, the through hole 23b has a funnel shape with a moderate flare, while the through hole 23c has a funnel shape with a highly accentuated flare which externally exposes an inlet mouth with a larger diameter.

Nut 30 is applicable on all the types of draining element 20.

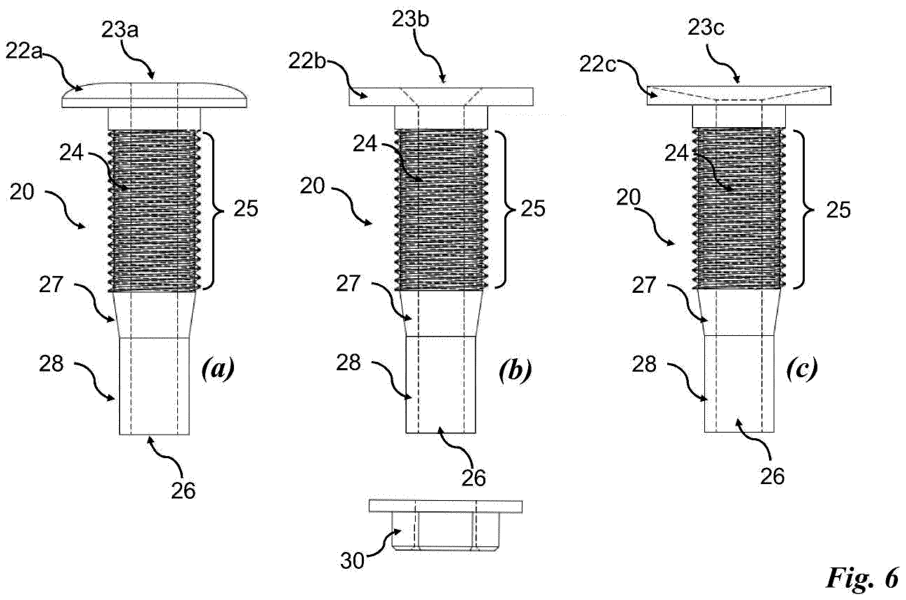

Figure 6 shows different embodiments of the draining element 20. They different from the ones in Figure 5 for the shape of the tubular body 24. In particular, in this case, the threaded tubular body 24 has small dimensions and there are two other non-threaded portions 27 and 28 having a smaller diameter. In greater detail, the junction portion 27 between the tubular body 24 and the tip portion 28 is frustoconical in shape. The tip portion 28 is instead always tubular like the tubular body 24, but it has a smaller section or diameter. This shape can allow the connection of an extension tube for draining fluids to the insulation element 5 by means of the draining element 20.

Also in this case, in addition to the different shape of the tubular body, which is only partially threaded, head 22 can have different shapes, i.e., round or flat, and the different embodiments of the through hole 23.

Also in this case, nut 30 cooperates with all types of draining element 20.

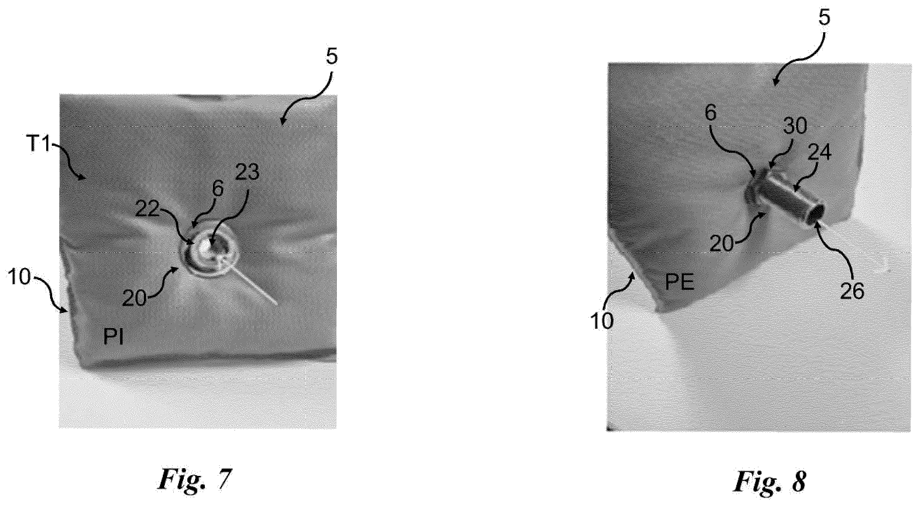

Figure 7 and Figure 8 show the inner part PI and the outer part PE, respectively, of the insulation element 5 with the draining element 20.

It is possible to arrange a sealing ring 6 on the two peripheral edges of the through hole 12 of the main body 10 to ensure that the head of the draining element 20 and nut 30 have a greater seal than the technical fabric, metal or other material T1 and T2 alone.

The inner part PI of the insulation element 5 is the portion of inlet space of the fluid, i.e., the area in which the fluid leak to be identified is created. It is defined by the outer surface of the first fabric layer T1 and is adapted to face the system element.

On the other hand, the outer part PE of the insulation element 5 is the portion of outlet space of the fluid, i.e., the area in which the fluid leak is collected. It is defined as the area surrounding the outer surface of the second fabric layer T2.

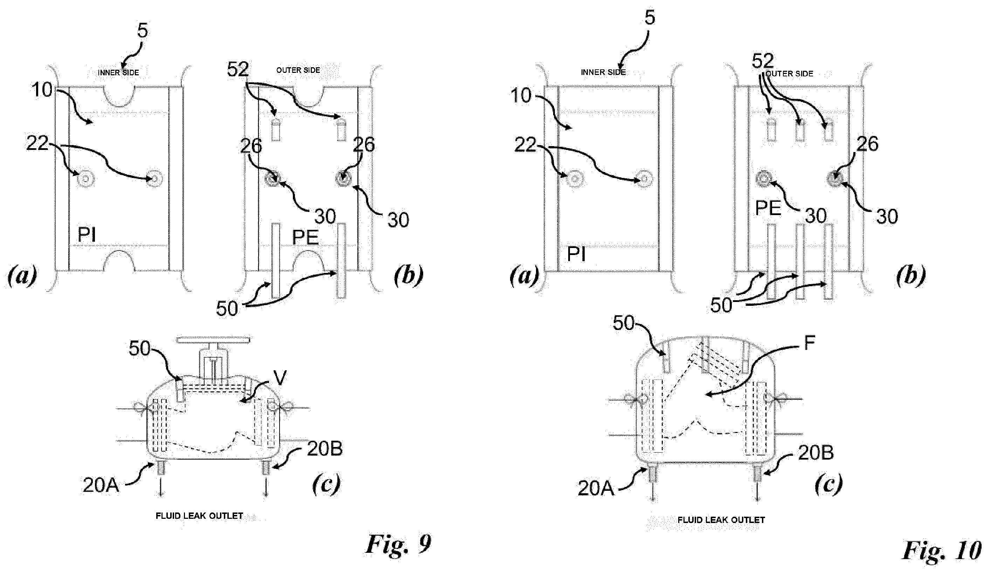

Figures 9 show an example of an insulation element 5 applied on a valve V. In this embodiment, the insulation element 5 is removable and provided with two draining elements 20A and 20B. The two draining elements 20A and 20B are positioned at the joining flanges between the delivery tubes and valve V. The arrows in the figures indicate the outlet direction of the fluid leak.

Figure 10 shows an example of insulation element 5 applied on a filter F. In this embodiment, the insulation element 5 is removable and provided with two draining elements 20A and 20B. The two draining elements 20A and 20B are positioned at the junction flanges between the delivery tube and filter F. The arrows in the figures indicate the outlet direction of the fluid leak.

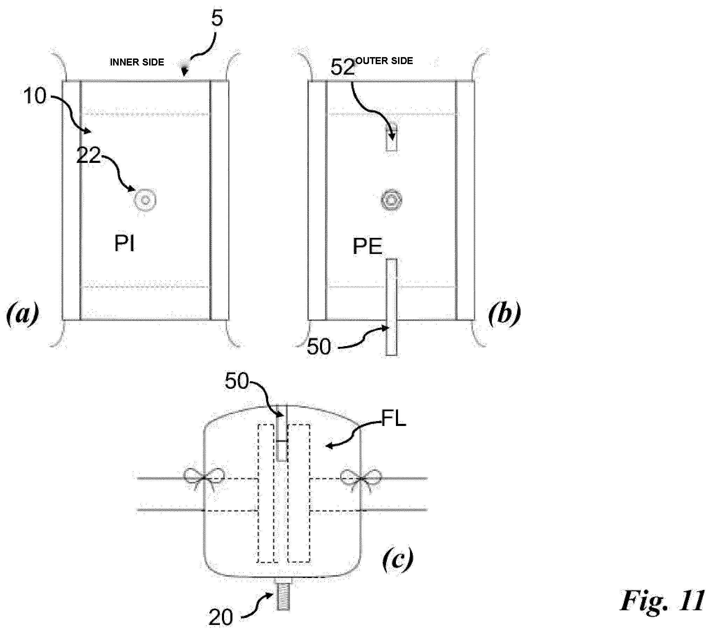

Finally, Figures 11 show an example of insulation element 5 applied on a flange FL. In this embodiment, the insulation element 5 is removable and is provided with a single draining element 20 at the joint between the plates of flange FL.

The insulation element 5 is provided with one or more closing elements, each provided with a ribbon or string element 50 which is inserted and secured in a locking element or buckle 52.

Alternatively, the closing element can be made with Velcro.

The description of specific embodiments provided above shows the invention from a conceptual point of view so that others, using the prior art, will be able to modify and/or adapt in various applications the specific embodiments without further research and without departing from the inventive concept, and, thus, it is understood that such adaptations and modifications will be considered as equivalents of the specific embodiments.

Means and materials for performing the various functions described may be of various nature without departing from the scope of the invention.

It is worth noting that the terminology or expressions used are only descriptive and therefore non-limiting.

Obviously, without prejudice to the principle of the invention, the construction details and the embodiments may widely vary with respect to the above description disclosed by way of mere example, without departing from the scope of the present invention.

Where the constructive features and techniques mentioned in the successive claims are followed by references signs or numerals, such reference signs were introduced for the sole purpose of increasing the intelligibility of the claims themselves, and consequently, such reference signs have no limiting effect on the interpretation of each element identified, by way of example only, by such reference signs.

## Claims

1. An insulation element (5) for a system element comprising a stratified main body (10) in turn comprising a first layer (T1) of technical fabric, metal or other material, a second layer (T2) of technical fabric, metal or other material, and at least one insulation layer (CB) comprised between said first layer (T1) of technical fabric and said second layer (T2) of technical fabric, wherein said insulation element (5) further comprises at least one draining element (20) which places an outer surface (PI) of the first fabric layer (T1), adapted to face the system element, into fluid communication with an area (PE) surrounding the outer surface of the second layer (T2) of technical fabric so that any leaks (P) involving the system element are promptly identified and visible outside the insulation element (5), wherein said draining element (20) comprises a head portion (22) and a tubular body (24), wherein the head portion (22) is provided with a through hole (23) and the tubular body (24) is an internally hollow tube having a thread (25) on the outer wall and an outlet mouth (26) to allow any fluid generated by leaks (P) of the system element to enter the draining element (20) by means of the through hole (23), flow through the tubular body (24) and exit to the outside of the insulation element (5) through the outlet mouth (26) of the draining element (20) in an area (PE) surrounding the outer surface of the second layer (T2) of technical fabric.

2. The insulation element (5) for system elements according to claim 1, wherein said first layer (T1) of technical fabric, metal or other material and said second layer (T2) of technical fabric, metal or other material are selected from glass fabric, silicone glass fabric, fabric made of PTFE, PTFE, Goretex, Cordura, PVC, polyurethane and other technical fabrics, aluminum and other materials or alloys.

3. The insulation element (5) for system elements according to claim 1 or claim 2, wherein said insulation layer (CB) is made of a material selected from rock wool, mineral felt, ceramic wool, nanotechnological material, rubber sponge and other insulation materials.

4. The insulation element (5) for system elements according to any one of the preceding claims, wherein said draining element (20) is made of steel, nylon, PTFE or other suitable materials.

5. The insulation element (5) for system elements according to any one of the preceding claims, wherein a through hole (12) allowing the insertion of the draining element (20) is provided on the main body (10) of the insulation element (5).

6. The insulation element (5) for system elements according to any one of the preceding claims, wherein the draining element (20) is inserted in the insulation element (5) with the head portion (22) facing the inner portion (PI) and with the tubular body (24) coming out of and protruding from the insulation element (5) towards the outer portion (PE).

7. The insulation element (5) for system elements according to any one of the preceding claims, wherein said draining element (20) is fastened to the insulation element (5) by means of a threaded nut (30).

8. The insulation element (5) for system elements according to any one of the preceding claims, wherein the head (22) of said draining element (20) is round (22a) or flat (22b, 22c) in shape.

9. The insulation element (5) for system elements according to any one of the preceding claims, wherein the through hole (23) is a simple cylindrical hole (23a) or a funnel shape with a moderate flare (23b) or a funnel shape with a highly accentuated flare (23c).

10. The insulation element (5) for system elements according to any one of preceding claims 1-8, wherein the tubular body (24) has the threaded portion with small dimensions and there are two other non-threaded portions (27, 28) having smaller diameter.

11. The insulation element (5) for system elements according to claim 10, wherein the non-threaded junction portion (27) between the threaded tubular body (24) and a non-threaded tip portion (28) is frustoconical in shape, and the non-threaded tip portion (28) has a smaller diameter than the tubular body (24) to allow connecting an extension tube for draining fluids to the insulation element (5) by means of the draining element (20).

12. The insulation element (5) for system elements according to any one of preceding claims 6-11, wherein a sealing ring (6) is arranged on the two peripheral edges of a through hole (12) of the main body (10) to ensure that, in a coupling, the head (22) of the draining element (20) and the nut (30) have a greater seal than the coupling to the technical fabric, metal or other material T1 and T2 alone.

13. The insulation element (5) for system elements according to any one of the preceding claims, wherein said insulation element (5) is adapted to be applied on a valve (V) or filter (F) and is provided with two draining elements (20A, 20B) positioned at the joining flanges.

14. The insulation element (5) for system elements according to any one of the preceding claims, wherein said insulation element (5) is adapted to be applied on a flange (FL) with the draining element (20) adapted to be positioned at the joint between the plates of the flange (FL).

15. The insulation element (5) for system elements according to any one of the preceding claims, wherein said insulation element (5) is provided with one or more closing elements, each provided with a ribbon or string element (50) that is inserted and secured in a locking element or buckle (52).
